# EUROPÄISCHE PATENTANMELDUNG

(11) **EP 4 644 025 A1**
(43) Veröffentlichungstag der Anmeldung: **05.11.2025**
(21) Anmeldenummer: 25171906.8
(22) Anmeldetag: 23.04.2025
(51) Int. Cl.: B23D 47/04, B23D 59/00, B23Q 3/00, G05B 19/18, B27B 5/065

(54) **WERKSTÜCKBEARBEITUNGSMASCHINE, VERFAHREN ZUM BETREIBEN EINER WERKSTÜCKBEARBEITUNGSMASCHINE, SOWIE COMPUTERPROGRAMMPRODUKT**

(30) Priorität: 30.04.2024 DE 102024112137
(71) Anmelder: HOMAG Plattenaufteiltechnik GmbH, 75365 Calw (DE)
(72) Erfinder: Martynenko, Sergey, 71083 Herrenberg (DE); Kaiser, Jonathan, 71083 Herrenberg (DE)
(74) Vertreter: DREISS Patentanwälte PartG mbB

(57) **Zusammenfassung**

Eine Werkstückbearbeitungsmaschine (10) umfasst eine Bearbeitungseinrichtung (46) zur Bearbeitung eines Werkstücks (24) und eine Halteeinrichtung (20) zum klemmenden Halten des Werkstücks (24) vor und/oder während und/oder nach der Bearbeitung durch die Bearbeitungseinrichtung (46), wobei die Halteeinrichtung (20) einen pneumatischen Antrieb (54, 64) umfasst. Es wird vorgeschlagen, dass die Werkstückbearbeitungsmaschine (10) eine Steuer- und/oder Regeleinrichtung (34) aufweist, die dazu eingerichtet und ausgebildet ist, einen Betriebsdruck des pneumatischen Antriebs (54, 64) oder eine äquivalente Größe abhängig von mindestens einem aktuellen Bearbeitungsparameter der Werkstückbearbeitungsmaschine (10) einzustellen.

## Beschreibung

Die Erfindung betrifft eine Werkstückbearbeitungsmaschine, ein Verfahren zum Betreiben einer Werkstückbearbeitungsmaschine, sowie ein Computerprogrammprodukt nach den Oberbegriffen des jeweiligen nebengeordneten Anspruchs.

DE 10 2015 206 660 A1 offenbart eine Werkstückbearbeitungsmaschine in Form einer Plattenaufteilsäge. Diese umfasst eine Bearbeitungseinrichtung in Form einer Kreissäge zur Bearbeitung eines plattenförmigen Werkstücks oder eines Stapels von plattenförmigen Werkstücken. Ferner umfasst die Plattenaufteilsäge eine Halteeinrichtung zum klemmenden Halten des Werkstücks während der Bearbeitung, wobei diese Halteeinrichtung als sogenannter "Druckbalken" ausgebildet ist. Hierbei handelt es sich um ein oberhalb von einem Maschinentisch angeordnetes Element, welches mittels eines pneumatischen Antriebs, typischerweise eines Pneumatikzylinders, in vertikaler Richtung bewegt werden kann. In dem Maschinentisch ist ein Sägeschlitz vorhanden, und während der Bearbeitung liegt das plattenförmige Werkstück auf dem Maschinentisch auf. Der Druckbalken kann auf das auf dem Maschinentisch liegende Werkstück während der Bearbeitung abgesenkt sein, wodurch das Werkstück zwischen dem Druckbalken und dem Maschinentisch klemmend gehalten ist.

DE 10 2008 033 496 A1 offenbart eine Werkstückbearbeitungsmaschine in Form einer Plattenaufteilsäge ähnlich der oben beschriebenen. Sie umfasst eine Halteeinrichtung zum klemmenden Halten des Werkstücks insbesondere vor der Bearbeitung, wobei diese Halteeinrichtung als sogenannte "Spannzange" ausgebildet ist. Eine Mehrzahl solcher Spannzangen ist typischerweise an einem sogenannten "Programmschieber" angeordnet, bei dem es sich um einen längs einer Förderrichtung bzw. Zuführrichtung beweglichen portalartigen Träger handelt. Die Mehrzahl von Spannzangen kann an einem in Förderrichtung bzw. Zuführrichtung gesehen hinteren Rand des Werkstücks angreifen und dieses dort klemmend halten. Hierzu verfügt jede Spannzange über einen pneumatischen Antrieb, typischerweise über einen Pneumatikzylinder. Durch eine Bewegung des Programmschiebers kann dann das Werkstück sowohl in Förderrichtung als auch entgegen der Förderrichtung bewegt werden, insbesondere der Sägeeinrichtung zugestellt werden.

Aufgabe der vorliegenden Erfindung ist es, eine Werkstückbearbeitungsmaschine zu schaffen, die im Betrieb besonders wenig Energie verbraucht und die eine kurze Zykluszeit aufweist.

Diese Aufgabe wird durch eine Werkstückbearbeitungsmaschine, ein Verfahren zum Betreiben einer Werkstückbearbeitungsmaschine und ein Computerprogrammprodukt mit den Merkmalen des jeweiligen nebengeordneten Anspruchs gelöst. Vorteilhafte Weiterbildungen der Werkstückbearbeitungsmaschine sind in Unteransprüchen angegeben.

Die erfindungsgemäße Werkstückbearbeitungsmaschine hat den Vorteil, dass sie mindestens zeitweise auch mit einem abgesenkten Betriebsdruck des pneumatischen Antriebs betrieben werden kann, ohne dass der sichere Betrieb der Werkstückbearbeitungsmaschine beeinträchtigt wird. Dem liegt die Überlegung zugrunde, dass ein Druckluftverbrauch des pneumatischen Antriebs mit dem Betriebsdruck bzw. Arbeitsdruck korreliert. Die Leistung der Maschine ist ebenfalls vom Betriebsdruck abhängig. Bei einem höheren Betriebsdruck ist beispielsweise eine Hubgeschwindigkeit eines Pneumatikzylinders schneller und eine Hubzeit kürzer als bei einem niedrigen Betriebsdruck.

Durch die Erfindung ist es möglich, den optimalen und in den meisten Fällen minimal möglichen Betriebsdruck in Abhängigkeit von dem Betrieb der Werkstückbearbeitungsmaschine einzustellen, und somit den Druckluftverbrauch zu reduzieren. Gleichwohl wird immer eine ausreichend hohe Klemmkraft und eine ausreichend kurze Hubzeit bzw. schnelle Hubgeschwindigkeit der Halteeinrichtung bereitgestellt. Um den Betriebsdruck in Abhängigkeit von der Werkstückbearbeitung an der Werkstückbearbeitungsmaschine adaptiv einzustellen und damit den Energieverbrauch zu senken und oder die Zykluszeit des Druckbalkens zu optimieren, wird der Betriebsdruck der Halteeinrichtung in unterschiedlichen Betriebszuständen der Werkstückbearbeitungsmaschine entsprechend einem vorgegebenen Optimierungsziel automatisch geändert bzw. angepasst.

Konkret wird dies erreicht durch eine erfindungsgemäße Werkstückbearbeitungsmaschine. Hierzu gehört vorliegend insbesondere eine Plattenaufteilanlage, und hier wiederum besonders bevorzugt eine Plattenaufteilsäge. Letztere kann beispielsweise einen Zuführtisch, einen Maschinentisch mit einer Bearbeitungseinrichtung in Form einer Sägeeinrichtung und einen Entnahmetisch umfassen. Die Sägeeinrichtung ist typischerweise an einem unterhalb vom Maschinentisch belegbaren Sägewagen angeordnet und kann durch einen Sägeschlitz nach oben über die Oberseite vom Maschinentisch ausgefahren werden, um ein dort liegendes plattenförmiges Werkstück oder einen Stapel aus plattenförmigen Werkstücken zu sägen.

Zu der erfindungsgemäßen Werkstückbearbeitungsmaschine gehört eine Bearbeitungseinrichtung zur Bearbeitung eines Werkstücks, beispielsweise die oben beschriebene Sägeeinrichtung, und eine Halteeinrichtung zum klemmenden Halten des Werkstücks vor und/oder während und/oder nach der Bearbeitung durch die Bearbeitungseinrichtung. Wenn die Werkstückbearbeitungsmaschine eine Plattenaufteilsäge ist, ist die Halteeinrichtung typischerweise ein Druckbalken, dessen Grundprinzip eingangs im Zusammenhang mit der Beschreibung des Standes der Technik beschrieben wurde, und/oder eine Spannzange, deren Grundprinzip ebenfalls eingangs im Zusammenhang mit der Beschreibung des Standes der Technik beschrieben wurde.

Die Halteeinrichtung umfasst typischerweise einen pneumatischen Antrieb, wobei dieser bei einer besonders bevorzugten Ausgestaltung als Pneumatikzylinder ausgebildet ist. Durch den pneumatischen Antrieb kann die Halteeinrichtung aus einer geöffneten Stellung, in der sie das Werkstück nicht klemmend hält, in eine geschlossene Stellung, in der sie das Werkstück klemmend hält, und zurückbewegt werden. Die Kraft, mit der die Halteeinrichtung das Werkstück klemmend hält (also die Klemmkraft), sowie die Geschwindigkeit, mit der die Halteeinrichtung aus der geöffneten Position in die geschlossene und zurückbewegt werden kann, hängt typischerweise - mindestens auch - von einem Betriebsdruck des pneumatischen Antriebs ab.

Erfindungsgemäß weist die Werkstückbearbeitungsmaschine eine Steuer- und/oder Regeleinrichtung auf, die beispielsweise mittels eines auf dieser abgespeicherten Computerprogrammprodukts dazu eingerichtet und ausgebildet ist, den Betriebsdruck des pneumatischen Antriebs oder eine äquivalente Größe abhängig von mindestens einem aktuellen Bearbeitungsparameter der Werkstückbearbeitungsmaschine einzustellen. Die äquivalente Größe kann beispielsweise eine Druckluftmenge bzw. ein Volumenstrom sein.

Besonders bevorzugt ist es, wenn die Steuer- und/oder Regeleinrichtung einen Sensor aufweist, der den Betriebsdruck des pneumatischen Antriebs oder die äquivalente Größe erfasst und der ein entsprechendes Signal erzeugt, auf dessen Basis die Steuer- und/oder Regeleinrichtung beispielsweise ein Druckregelventil ansteuern kann, durch welches der Betriebsdruck des pneumatischen Antriebs beeinflusst werden kann. In diesem Fall wird der Betriebsdruck oder die äquivalente Größe durch einen geschlossenen Regelkreis geregelt. Grundsätzlich denkbar ist aber auch eine gesteuerte Einstellung des Betriebsdrucks oder der äquivalenten Größe.

Der gewünschte Betriebsdruck oder die äquivalente Größe hängt dabei von einem aktuellen Bearbeitungsparameter der Werkstückbearbeitungsmaschine ab. Wie nachfolgend noch dargelegt werden wird, ist der Begriff "Bearbeitungsparameter" relativ breit zu verstehen. Er umfasst sowohl solche Parameter, die dem zu bearbeitenden Werkstück (Ausgangswerkstück) zugeordnet sind bzw. dieses charakterisieren, als auch solche Parameter, die dem durch die Bearbeitung aus dem Ausgangswerkstück erzeugten Werkstück zugeordnet sind bzw. dieses charakterisieren, als auch solche Parameter, die der Art der Bearbeitung zugeordnet sind bzw. diese charakterisieren.

Bei einer Weiterbildung ist vorgesehen, dass die Steuer- und/oder Regeleinrichtung einen Datenspeicher umfasst, in dem Datensätze abgespeichert sind, welche jeweils einen Wert für den Betriebsdruck oder die äquivalente Größe mit einem Wert des Bearbeitungsparameters verknüpfen. Bei der Einstellung des Betriebsdrucks werden also Vorgabewerte aus einer Datenbank verwendet, um den optimalen Betriebsdruck festzulegen. Dabei können die aktuellen Daten auch für eine Erweiterung der Datenbank verwendet werden.

Über einen entsprechenden Algorithmus kann jener Datensatz identifiziert werden, dessen Bearbeitungsparameter dem aktuellen Bearbeitungsparameter am nächsten kommt. Denkbar ist auch, dass die Datensätze nicht nur einen Typ von Bearbeitungsparametern enthalten, sondern mehrere unterschiedliche Typen von Bearbeitungsparametern. Der entsprechende Betriebsdruck bzw. die entsprechende äquivalente Größe gilt somit beispielsweise für ein Wertepaar von Bearbeitungsparametern. Auch hier kann beispielsweise über einen entsprechenden Algorithmus dann jener Datensatz identifiziert werden, dessen Bearbeitungsparameter-Paar dem aktuellen Bearbeitungsparameter-Paar am nächsten kommt. Hierzu können die Bearbeitungsparameter eines Paares beispielsweise gewichtet werden, und/oder es kann zur Identifizierung KI eingesetzt werden.

Bei einer Weiterbildung ist vorgesehen, dass die Steuer- und/oder Regeleinrichtung dazu eingerichtet und ausgebildet ist, den Betriebsdruck des pneumatischen Antriebs oder die äquivalente Größe abhängig von einem Betriebsparamater einzustellen, der ein Werkstückparameter ist. Der Betriebsparameter ist somit, wie bereits oben angedeutet wurde, dem Ausgangswerkstück oder dem bearbeiteten bzw. erzeugten Werkstück zugeordnet bzw. charakterisiert dieses. Dem liegt die Überlegung zugrunde, dass die Halteeinrichtung ja unmittelbar auf das Ausgangswerkstück wirkt, indem es dieses klemmend hält, und dass daher die Art des Werkstücks einen besonders großen Einfluss auf den Betriebsdruck des pneumatischen Antriebs der Halteeinrichtung haben sollte.

Bei einer Weiterbildung ist vorgesehen, dass der Werkstückparameter einen oder mehrere aus der folgenden Gruppe umfasst: einzelnes Werkstück oder Werkstückstapel (bei einem vergleichsweise dicken Werkstückstapel dürfte in der Regel ein höherer Betriebsdruck notwendig sein als bei einem einzelnen Werkstück), Höhe des Werkstücks oder Werkstückstapels (bei einem vergleichsweise dicken Werkstück oder einem Stapel aus vergleichsweise vielen Werkstücken dürfte in der Regel ein höherer Betriebsdruck notwendig sein als bei einem vergleichsweise dünnen Werkstück oder einem Stapel aus vergleichsweise wenigen Werkstücken), Material des Werkstücks (bei einem vergleichsweise weichen und insoweit druckempfindlichen Material sollte ein geringerer Betriebsdruck gewählt werden als bei einem vergleichsweise harten und insoweit wenig druckempfindlichen Material), Qualität des Ausgangswerkstücks (bei einem beispielsweise vergleichsweise unebenen oder mit starken inneren Spannungen versehenen Ausgangswerkstück sollte ein höherer Betriebsdruck gewählt werden als bei einem vergleichsweise ebenen oder spannungsarmen Ausgangswerkstück, und bei einem vergleichsweise großen Ausgangswerkstück sollte ebenfalls ein höherer Betriebsdruck gewählt werden als bei einem vergleichsweise kleinen Ausgangswerkstück).

Bei einer Weiterbildung ist vorgesehen, dass die Steuer- und/oder Regeleinrichtung dazu eingerichtet und ausgebildet ist, den Betriebsdruck des pneumatischen Antriebs oder die äquivalente Größe abhängig von einem Bearbeitungsparameter einzustellen, der eine gewünschte Bearbeitungsqualität, also eine Qualität des erzeugten Werkstücks, ist. Die Bearbeitungsqualität kann beispielsweise eine Schnittqualität (Welligkeit, Ausreißer, etc.), eine Maßhaltigkeit und/oder eine Winkelgenauigkeit sein. Bei höheren Qualitätsanforderungen beim erzeugten Werkstück sollte ein höherer Betriebsdruck gewählt werden als bei vergleichsweise geringen Qualitätsanforderungen.

Bei einer Weiterbildung ist vorgesehen, die Steuer- und/oder Regeleinrichtung dazu eingerichtet und ausgebildet ist, den Betriebsdruck des pneumatischen Antriebs oder die äquivalente Größe zusätzlich abhängig von einem Soll-Betriebsparameter einzustellen. Hierdurch kann die Zuverlässigkeit im Betrieb der Werkstückbearbeitungsmaschine verbessert werden.

Bei einer Weiterbildung ist vorgesehen, dass der Soll-Betriebsparameter einen oder mehrere aus der folgenden Gruppe umfasst: Druckluftverbrauch (wenn beispielsweise nur vergleichsweise wenig Druckluft zur Verfügung steht, sollte der Betriebsdruck abgesenkt werden), Produktivität der Werkstückbearbeitungsmaschine (wenn beispielsweise nur eine relativ geringe Produktivität ausreicht, weil die Werkstückbearbeitungsmaschine mit dem geplanten Arbeitsvorrat nicht voll ausgelastet ist), dann kann der Betriebsdruck abgesenkt werden).

Bei einer Weiterbildung ist vorgesehen, dass die Steuer- und/oder Regeleinrichtung dazu eingerichtet und ausgebildet ist, den Betriebsdruck des pneumatischen Antriebs oder die äquivalente Größe unabhängig vom aktuellen Bearbeitungsparameter auf einen vorgegebenen Sicherheitswert einzustellen, wenn von einem Sensor eine sicherheitsrelevante Situation erkannt wird. Beispielsweise kann von einem Sensor erkannt werden, dass die Hände einer Bedienperson sich im Bereich der Halteeinrichtung befinden. Der Sensor kann beispielsweise eine berührungsloser Sensor sein, wie beispielsweise ein Lichtgitter, ein Laser oder eine Kamera mit Bildverarbeitungseinrichtung, oder kann ein taktiler Sensor sein. In diesem Fall ist sicherzustellen, dass durch eine Veränderung des Betriebsdrucks nicht ein unerwünschtes Schließen der Halteeinrichtung oder ein unerwünschter Start der Bewegung der Halteeinrichtung bewirkt wird. Dies wird durch den vorgegebenen Sicherheitswert realisiert. Grundsätzlich ist es auch denkbar, den Betriebsdruck angrenzender Bereiche eines pneumatischen Systems bzw. weiterer pneumatischer Antriebe, wie beispielsweise pneumatisch betätigter Anschläge im Bereich des Maschinentisches, in einen Regelkreis der Halteeinrichtung aufzunehmen und zusammen mit der Halteeinrichtung zu regeln, um weitere Energieeinsparungen zu erzielen.

Die Erfindung betrifft auch ein Verfahren zum Betreiben einer Werkstückbearbeitungsmaschine, insbesondere einer Plattenaufteilanlage, bei dem eine Werkstück mittels einer Bearbeitungseinrichtung bearbeitet wird und bei dem das Werkstück vor und/oder während und/oder nach dem Bearbeiten durch die Bearbeitungseinrichtung mittels einer Halteeinrichtung klemmend gehalten wird, wobei die Halteeinrichtung pneumatisch angetrieben wird. Erfindungsgemäß wird vorgeschlagen, dass ein Betriebsdruck des pneumatischen Antriebs oder eine äquivalente Größe abhängig von mindestens einem aktuellen Bearbeitungsparameter der Werkstückbearbeitungsmaschine durch eine Steuer- und/oder Regeleinrichtung eingestellt wird.

Ferner betrifft die Erfindung ein Computerprogrammprodukt, umfassend Befehle, die bei der Ausführung des Programms durch einen Computer diesen veranlassen, das Verfahren der obigen Art auszuführen.

Nachfolgend wird die Erfindung unter Bezugnahme auf die beigefügte Zeichnung erläutert. In der Zeichnung zeigen:
- Figur 1: eine Draufsicht auf eine Werkstückbearbeitungsmaschine in Form einer Plattenaufteilsäge;
- Figur 2: eine schematische Seitenansicht der Werkstückbearbeitungsmaschine von Figur 1 im Bereich einer Halteeinrichtung in Form eines Druckbalkens zum klemmenden Halten eines Werkstücks bzw. Werkstückstapels;
- Figur 3: eine schematische Seitenansicht der Werkstückbearbeitungsmaschine von Figur 1 im Bereich einer Halteeinrichtung in Form einer Spannzange zum klemmenden Halten eines Werkstücks bzw. Werkstückstapels; und
- Figur 4: ein Flussdiagramm eines Verfahrens zum Betreiben der Plattenaufteilsäge von Figur 1.

Nachfolgend tragen funktionsäquivalente Elemente und Bereiche in unterschiedlichen Figuren die gleichen Bezugszeichen. Sie werden typischerweise nur bei der erstmaligen Erwähnung im Detail beschrieben.

Eine Werkstückbearbeitungsmaschine trägt in den Figuren insgesamt das Bezugszeichen 10. Sie ist vorliegend beispielhaft als Plattenaufteilsäge ausgebildet, mit der großformatige plattenförmige Werkstücke gesägt werden können.

Derartige Plattenaufteilsägen werden beispielsweise für die Herstellung von Möbelteilen eingesetzt.

Die Werkstückbearbeitungsmaschine 10 umfasst vorliegend beispielhaft einen Zuführtisch 12, einen sich an diesen anschließenden Maschinentisch 14 und einen sich an diesen anschließenden Entnahmetisch 16. Der Zuführtisch 12 kann typischerweise durch eine Mehrzahl von Rollenbahnen ausgebildet sein, wohingegen der Maschinentisch 14 und der Entnahmetisch 16 typischerweise als Luftkissentische ausgebildet sein können.

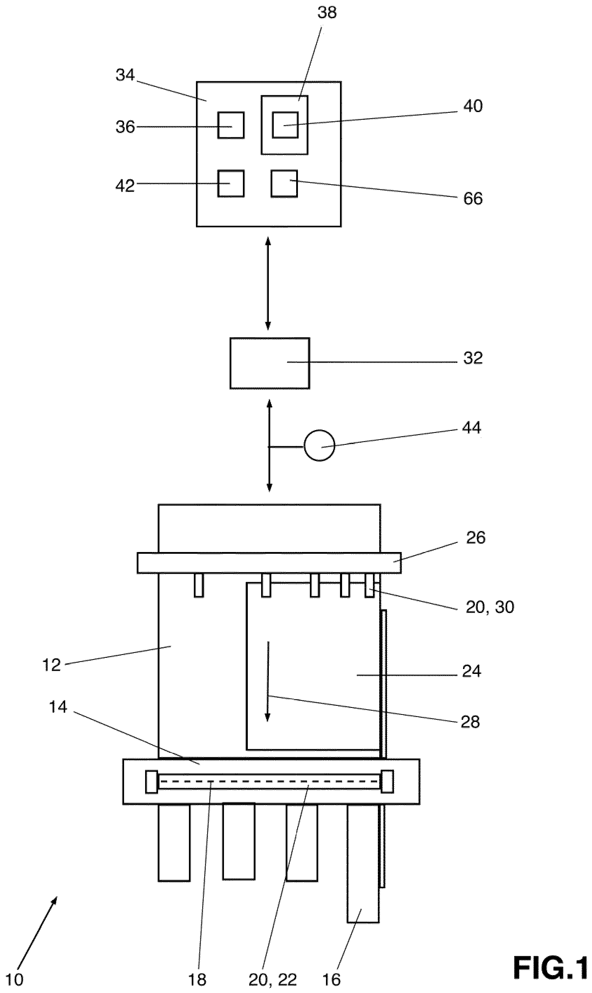

Im Maschinentisch 14 ist ein in Figur 1 durch eine gestrichelte Linie angedeuteter Sägeschlitz 18 vorhanden, durch den, wie später noch stärker im Detail dargelegt werden wird, ein Kreissägeblatt einer als Sägeeinrichtung ausgebildeten Bearbeitungseinrichtung nach oben über die Oberseite des Maschinentisches 14 bewegt werden kann, und längs zu dem das Kreissägeblatt bewegt werden kann. Oberhalb von dem Sägeschlitz 18 ist eine Halteeinrichtung 20 zum klemmenden Halten eines auf dem Maschinentisch 14 liegenden Werkstücks angeordnet. Die Halteeinrichtung 20 ist in diesem Fall als Druckbalken 22 ausgebildet.

Zur Bewegung eines Werkstücks oder Werkstückstapels 24 auf dem Zuführtisch 12 und auch auf dem Maschinentisch 14 und gegebenenfalls auch auf dem Entnahmetisch 16 dient ein portalartiger Programmschieber 26, der motorisch in einer Zuführrichtung 28 und auch entgegen der Zuführrichtung 28 bewegt werden kann. An dem Programmschieber 26 sind eine Mehrzahl von weiteren Halteeinrichtungen 20 zum klemmenden Halten eines in Zuführrichtung 28 gesehenen hinteren Randes eines auf dem Zuführtisch 12, dem Maschinentisch 16 und/oder dem Entnahmetisch 18 liegenden Werkstücks oder Werkstückstapels 24 befestigt. Diese Halteeinrichtungen 20 sind als Spannzangen 30 ausgebildet.

Zu der Werkstückbearbeitungsmaschine 10 gehört auch eine Druckluftversorgung 32, welche mit weiter unten noch stärker im Detail beschriebenen pneumatischen Antrieben des Druckbalkens 22 und der Spannzangen 30 verbunden ist. Die Druckluftversorgung 32 und auch weitere Komponenten der Werkstückbearbeitungsmaschine 10 sind steuerungstechnisch mit einer Steuer- und/oder Regeleinrichtung 34 gekoppelt. Bei der Steuer- und/oder Regeleinrichtung 34 kann es sich beispielsweise um einen Computer handeln. Die Steuer- und/oder Regeleinrichtung 34 umfasst typischerweise mindestens ein HMI 36, beispielsweise in Form von Tastatur/Bildschirm, o. ä., einen Speicher 38, auf dem ein Computerprogrammprodukt 40 abgespeichert ist, und einen Prozessor 42, durch den das Computerprogrammprodukt 40 ausgeführt und zur Ausführung von Verfahrensschritten bzw. eines Prozessablaufs der Werkstückbearbeitungsmaschine 10 umgesetzt werden kann. Ein Betriebsdruck der Druckluftversorgung 32 wird durch einen Drucksensor 44 erfasst und der Steuer- und Regeleinrichtung 34 mitgeteilt.

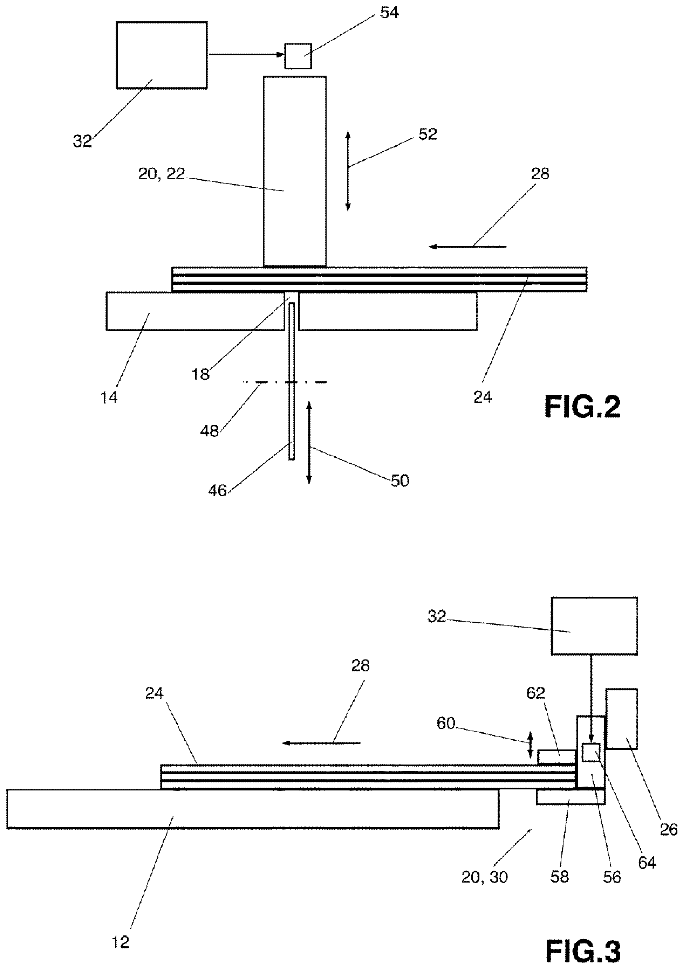

Nun wird die Werkstückbearbeitungsmaschine 10 im Bereich des Druckbalkens 22 unter Bezugnahme auf Figur 2 stärker im Detail erläutert: Man erkennt dort ein Sägeblatt 46 der Sägeeinrichtung bzw. Bearbeitungseinrichtung, welches motorisch um eine Drehachse 48 rotieren kann. Das Sägeblatt 46 ist typischerweise an einem senkrecht zur Zeichnungsebene von Figur 2 verfahrbaren Sägewagen (nicht dargestellt) montiert, und es kann in vertikaler Richtung entsprechend dem Doppelpfeil 50 bewegt werden.

Der Druckbalken 22 kann ebenfalls entsprechend einem Doppelpfeil 52 in vertikaler Richtung bewegt werden, und zwar mittels eines pneumatischen Antriebs 54, beispielsweise eines oder mehrerer Pneumatikzylinder. Der pneumatische Antrieb 54 ist wiederum mit der Druckluftversorgung 32 verbunden. Man erkennt, dass in der in Figur 2 gezeigten Betriebssituation der Werkstückstapel 24 zwischen dem in Richtung Maschinentisch 14 abgesenkten Druckbalken 22 und dem Maschinentisch 14 klemmend gehalten ist.

Nun wird die Werkstückbearbeitungsmaschine 10 im Bereich der Spannzangen 30 unter Bezugnahme auf Figur 3 stärker im Detail erläutert: jede Spannzange 30 umfasst einen am Programmschieber 26 befestigten Grundkörper 56 und einen an diesem starr befestigten unteren Spannzangenfinger 58. Ferner umfasst jede Spannzange 30 einen relativ zum Grundkörper 56 in vertikaler Richtung entsprechend dem Doppelpfeil 60 motorisch beweglichen oberen Spannzangenfinger 62. Zur Bewegung des oberen Spannzangenfingers 62 dient ein pneumatischer Antrieb 64, wiederum beispielsweise in Form eines Pneumatikzylinders. Der pneumatischen Antrieb 64 ist wiederum mit der Druckluftversorgung 32 verbunden. In der gezeigten Betriebssituation wird ein hinterer Rand (ohne Bezugszeichen) des Werkstückstapels 24 durch die Spannzangen 30 klemmend gehalten.

Die Steuer- und/oder Regeleinrichtung 34 ist durch eine entsprechende Ausgestaltung des Computerprogrammprodukts 40 dazu eingerichtet und ausgebildet, einen Betriebsdruck des pneumatischen Antriebs 54 des Druckbalkens 22 und des pneumatischen Antriebs 64 der Spannzangen 30 (oder eine zum Betriebsdruck äquivalente Größe, beispielsweise eine Durchflussmenge) abhängig von mindestens einem aktuellen Bearbeitungsparameter der Werkstückbearbeitungsmaschine 10 einzustellen.

Ein solcher aktueller Bearbeitungsparameter kann beispielsweise ein Werkstückparameter sein und als solcher definieren, ob aktuell ein einzelnes plattenförmiges Werkstück oder - wie im vorliegenden Ausführungsbeispiel - ein Werkstückstapel 24 von mehreren aufeinanderliegenden plattenförmigen Werkstücken bearbeitet werden soll. Auch kann der aktuelle Bearbeitungsparameter definieren, wie hoch das Werkstück oder der Werkstückstapel 24 ist, und/oder aus wie vielen Werkstücken der Werkstückstapel 24 besteht (vorliegend beispielhaft drei Werkstücke), und/oder aus welchem Material das Werkstück (Ausgangswerkstück) bzw. die Werkstücke (Ausgangswerkstücke) des Werkstückstapels 24 sind, und/oder welche Qualität das Werkstück bzw. die Werkstücke des Werkstückstapels 24 aufweisen (ob sie beispielsweise hohe innere Spannungen haben, eher eben oder eher wellig sind, etc.).

Die aktuellen Bearbeitungsparameter sind der Steuer- und/oder Regeleinrichtung 34 beispielsweise aus einem Bearbeitungsplan (im Falle der vorliegenden Plattenaufteilsäge 10 einem Schnittplan) bekannt. Alternativ oder zusätzlich können sie auch durch einen oder mehrere entsprechende Sensoren erfasst werden, beispielsweise mittels Bilderfassung oder ähnlichem. Denkbar ist ferner, dass sie von einer Bedienperson unmittelbar vor Beginn der Bearbeitung an einer entsprechenden Eingabeeinrichtung eingegeben werden.

Die Steuer- und/oder Regeleinrichtung 34 kann einen Datenspeicher bzw. eine Datenbank 66 umfassen, in dem Datensätze abgespeichert sind, welche jeweils einen Wert für den Betriebsdruck (oder die äquivalente Größe) mit einem Wert des Bearbeitungsparameters verknüpfen. Durch die Steuer- und/oder Regeleinrichtung 34 kann dann automatisch jener Datensatz ausgewählt werden, dessen Bearbeitungsparameter am ehesten dem aktuellen tatsächlichen Bearbeitungsparameter entspricht, und entsprechend ergibt sich der Wert für den Betriebsdruck, der dann von der Steuer- und/oder Regeleinrichtung 34 an der Druckluftversorgung 32 eingestellt wird. Hierzu verfügt die Druckluftversorgung 32 beispielsweise über ein Druckregelventil, welches in der Zeichnung jedoch nicht dargestellt ist.

Möglich ist auch, dass die Steuer- und/oder Regeleinrichtung 34 durch ein entsprechendes Computerprogrammprodukt 40 dazu eingerichtet und ausgebildet ist, den Betriebsdruck der pneumatischen Antriebe 54 und 64 oder eine entsprechende äquivalente Größe abhängig von einem Bearbeitungsparameter einzustellen, der eine gewünschte Bearbeitungsqualität am erzeugten Werkstück ist, beispielsweise eine Schnittqualität, eine Maßhaltigkeit und/oder eine Winkelgenauigkeit. Dabei dürfte eine vergleichsweise hohe gewünschte Bearbeitungsqualität typischerweise er einen vergleichsweise hohen pneumatischen Betriebsdruck benötigen. Schließlich kann zur Einstellung des Betriebsdrucks auch noch ein Soll-Betriebsparameter berücksichtigt werden, beispielsweise ein Druckluftverbrauch oder eine Produktivität der Werkstückbearbeitungsmaschine 10.

Durch eine entsprechende Ausgestaltung des Computerprogrammprodukt 40 kann die Steuer- und/oder Regeleinrichtung 34 ferner dazu eingerichtet und ausgebildet sein, den Betriebsdruck der pneumatischen Antriebe 54 und 64 (oder die äquivalente Größe) unabhängig vom aktuellen Bearbeitungsparameter auf einen vorgegebenen Sicherheitswert einzustellen, wenn von einem Sensor eine sicherheitsrelevante Situation erkannt wird. Beispielsweise kann von einer Kamera (nicht dargestellt) erkannt werden, dass die Hand einer Bedienperson sich unterhalb vom Druckbalken 22 befindet. In diesem Fall wird der Betriebsdruck so eingestellt, dass der Druckbalken 22 zuverlässig in einer oberen Position verbleiben kann, also ein Einquetschen der Hand der Bedienperson verhindert wird.

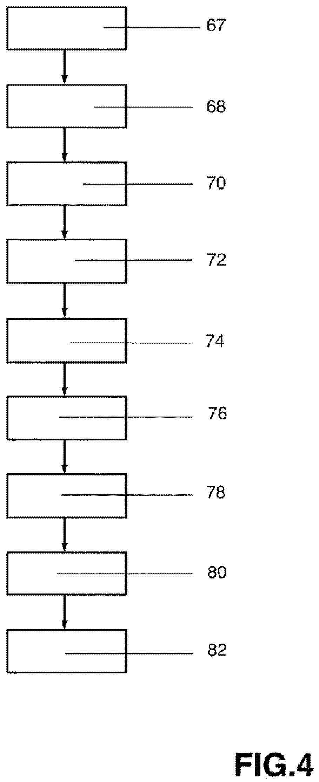

Ein Verfahren zum Betreiben der Werkstückbearbeitungsmaschine 10 und des Druckbalkens 22 kann beispielsweise wie folgt ablaufen (vergleiche Figur 4): das Verfahren startet in einem Funktionsblock 67. In einem Funktionsblock 68 wird eine Datenbank mit den Vorgabewerten für den Betriebsdruck und/oder für einen Volumenstrom pro Baugruppe der Werkstückbearbeitungsmaschine 10 je nach Bearbeitungsverfahren (z.B. Einzelplatten oder Plattenstapel) erstellt. Dabei werden insbesondere folgende Faktoren berücksichtigt: Höhe des Plattenstapels, Material (Druckempfindlichkeit) und/oder gewünschte Bearbeitungsqualität.

Beispielsweise bei einem dickeren Werkstückstapel dürfte typischerweise ein höherer Betriebsdruck als bei einem Einzelwerkstück erforderlich sein, und beispielsweise bei einem besonders druckempfindlichen Material darf eine bestimmte Klemmkraft typischerweise nicht überschritten werden, um das Material nicht zu beschädigen. Auch ist die Schnittqualität, also die Qualität der Schnittkante am erzeugten Werkstück, besonders beim Sägen eines Werkstückstapels deutlich abhängig von der Klemmkraft und somit vom Betriebsdruck des pneumatischen Antriebs 54 des Druckbalkens 22.

Vor und während des Betriebs der Werkstückbearbeitungsmaschine 10 kann in einem Funktionsblock 70 eine vorgegebene Zielgröße (Druckluftverbrauch, Produktivität der Werkstückbearbeitungsmaschine 10, Schnittqualität, Maßhaltigkeit und Winkelgenauigkeit) für eine Optimierung des Betriebsdrucks des pneumatischen Antriebs 52 des Druckbalkens 22 definiert oder verändert werden.

In einer Arbeitsvorbereitung wird in einem Funktionsblock 72 aus mehreren Schnittplänen ein Bearbeitungsauftrag erstellt und an die Werkstückbearbeitungsmaschine 10 gesendet. Alternativ kann der Schnittplan oder der Bearbeitungsauftrag auch an der Werkstückbearbeitungsmaschine 10 erstellt werden.

An der Werkstückbearbeitungsmaschine 10 wird der Bearbeitungsauftrag in einem Funktionsblock 74 nach den einzelnen Schnittplänen abgearbeitet. Die Daten der einzelnen Schnittpläne werden an der Werkstückbearbeitungsmaschine 10 verarbeitet, und hieraus wird der Prozessablauf an der Werkstückbearbeitungsmaschine 10 generiert. Neben den Zuschnittinformationen enthält der Schnittplan auch Informationen über das Plattenmaterial, beispielsweise einen Identifikator, Informationen zum Dekor/Beschichtung, Materialabmessungen, Plattendicke, Anzahl der Werkstücke im Werkstückstapel, etc.. Weitere Materialeigenschaften können über eine Materialdatenbank abgerufen werden.

Bei der Generierung des Prozessablaufs wird in einem Funktionsblock 76 der Betriebsdruck des pneumatischen Antriebs 54 des Druckbalkens 22 in Abhängigkeit von dem Schnittplan und dazugehörigen, hinterlegten Bearbeitungsparametern (z.B. Arbeitsdruck oder Spannkraft) eingestellt. Dabei werden typischerweise die folgenden Parameter berücksichtigt: Material und Materialeigenschaften (Materialebenheit, Spannungen im Material, Anzahl der Werkstücke im Werkstückstapel, Werkstückabmessungen).

Bei der Einstellung des Betriebsdrucks werden in einem Funktionsblock 78 Vorgabewerte aus der Datenbank 66 verwendet, um den optimalen Betriebsdruck in Bezug auf die vorgegebenen Betriebsparameter (Schnittqualität, Maßhaltigkeit, Winkelgenauigkeit, Produktivität der Maschine, etc.) festzulegen.

In einem Funktionsblock 80 können die aktuellen Daten für eine Erweiterung der Datenbank 66 verwendet werden. Innerhalb des Schnittplanes kann ein automatischer Wechsel der Betriebsart (Bearbeitung von einzelnen Werkstücken oder Bearbeitung von Werkstückstapeln) erfolgen. In diesem Fall kann der Betriebsdruck im Funktionsblock 80 an die vorliegenden Optimierungs- und Bearbeitungsvorgaben angepasst werden.

Das Verfahren endet in einem Funktionsblock 82.

## Patentansprüche

1. Werkstückbearbeitungsmaschine (10), umfassend eine Bearbeitungseinrichtung (46) zur Bearbeitung eines Werkstücks (24) und eine Halteeinrichtung (20) zum klemmenden Halten des Werkstücks (24) vor und/oder während und/oder nach der Bearbeitung durch die Bearbeitungseinrichtung (46), wobei die Halteeinrichtung (20) einen pneumatischen Antrieb (54, 64) umfasst, **dadurch gekennzeichnet, dass** die Werkstückbearbeitungsmaschine (10) eine Steuer- und/oder Regeleinrichtung (34) aufweist, die dazu eingerichtet und ausgebildet ist, einen Betriebsdruck des pneumatischen Antriebs (54, 64) oder eine äquivalente Größe abhängig von mindestens einem aktuellen Bearbeitungsparameter der Werkstückbearbeitungsmaschine (10) einzustellen.

2. Werkstückbearbeitungsmaschine (10) nach Anspruch 1, **dadurch gekennzeichnet, dass** die Steuer- und/oder Regeleinrichtung (34) einen Datenspeicher (66) umfasst, in dem Datensätze abgespeichert sind, welche jeweils einen Wert für den Betriebsdruck oder die äquivalente Größe mit einem Wert des Bearbeitungsparameters verknüpfen.

3. Werkstückbearbeitungsmaschine (10) nach wenigstens einem der vorhergehenden Ansprüche, **dadurch gekennzeichnet, dass** die Steuer- und/oder Regeleinrichtung (34) dazu eingerichtet und ausgebildet ist, den Betriebsdruck des pneumatischen Antriebs (54, 64) oder die äquivalente Größe abhängig von einem Bearbeitungsparameter einzustellen, der ein Werkstückparameter ist.

4. Werkstückbearbeitungsmaschine (10) nach Anspruch 3, **dadurch gekennzeichnet, dass** der Werkstückparameter einen oder mehrere aus der folgenden Gruppe umfasst: einzelnes Werkstück oder Werkstückstapel (24), Höhe des Werkstücks oder Werkstückstapels (24), Material des Werkstücks (24), Qualität des Ausgangswerkstücks (24).

5. Werkstückbearbeitungsmaschine (10) nach wenigstens einem der vorhergehenden Ansprüche, **dadurch gekennzeichnet, dass** die Steuer- und/oder Regeleinrichtung (34) dazu eingerichtet und ausgebildet ist, den Betriebsdruck des pneumatischen Antriebs (54, 64) oder die äquivalente Größe abhängig von einem Bearbeitungsparameter einzustellen, der eine gewünschte Bearbeitungsqualität ist.

6. Werkstückbearbeitungsmaschine (10) nach wenigstens einem der vorhergehenden Ansprüche, **dadurch gekennzeichnet**, die Steuer- und/oder Regeleinrichtung (34) dazu eingerichtet und ausgebildet ist, den Betriebsdruck des pneumatischen Antriebs (54, 64) oder die äquivalente Größe zusätzlich abhängig von einem Soll-Betriebsparameter einzustellen.

7. Werkstückbearbeitungsmaschine (10) nach Anspruch 6, **dadurch gekennzeichnet, dass** der Soll-Betriebsparameter einen oder mehrere aus der folgenden Gruppe umfasst:
Druckluftverbrauch, Produktivität der Werkstückbearbeitungsmaschine (10).

8. Werkstückbearbeitungsmaschine (10) nach wenigstens einem der vorhergehenden Ansprüche, **dadurch gekennzeichnet, dass** die Steuer- und/oder Regeleinrichtung (34) dazu eingerichtet und ausgebildet ist, den Betriebsdruck des pneumatischen Antriebs (54, 64) oder die äquivalente Größe unabhängig vom aktuellen Bearbeitungsparameter auf einen vorgegebenen Sicherheitswert einzustellen, wenn von einem Sensor eine sicherheitsrelevante Situation erkannt wird.

9. Werkstückbearbeitungsmaschine (10) nach wenigstens einem der vorhergehenden Ansprüche, **dadurch gekennzeichnet, dass** sie eine Plattenaufteilsäge ist, und dass die Halteeinrichtung (20) ein Druckbalken (22) und/oder mindestens eine Spannzange (30) ist.

10. Verfahren zum Betreiben einer Werkstückbearbeitungsmaschine (10), insbesondere Plattenaufteilanlage, bei dem eine Werkstück (24) mittels einer Bearbeitungseinrichtung (46) bearbeitet wird und bei dem das Werkstück (24) vor und/oder während und/oder nach dem Bearbeiten durch die Bearbeitungseinrichtung (46) mittels einer Halteeinrichtung (20) klemmend gehalten wird, wobei die Halteeinrichtung (20) pneumatisch angetrieben wird, **dadurch gekennzeichnet, dass** ein Betriebsdruck des pneumatischen Antriebs (54, 64) oder eine äquivalente Größe abhängig von mindestens einem aktuellen Bearbeitungsparameter der Werkstückbearbeitungsmaschine (10) durch eine Steuer- und/oder Regeleinrichtung (34) eingestellt wird.

11. Computerprogrammprodukt (40), umfassend Befehle, die bei der Ausführung des Programms durch einen Computer diesen veranlassen, das Verfahren nach Anspruch 10 auszuführen.
